# EUROPEAN PATENT APPLICATION

(11) **EP 2 842 923 A1**
(43) Date of publication of application: **04.03.2015**
(21) Application number: 13004312.8
(22) Date of filing: 03.09.2013
(51) Int. Cl.: C04B 28/06, C04B 7/32, C04B 111/00

(54) **Binder comprising calcium sulfoaluminate cement and magnesium compound**

(71) Applicant: HeidelbergCement AG, 69120 Heidelberg (DE)
(72) Inventor: Bullerjahn, Frank, 69181 Leimen (DE); Ben Haha, Mohsen, 69117 Heidelberg (DE); Schmitt, Dirk, 69181 Leimen (DE); Mikanovic, Ingrid, 69181 Leimen (DE)
(74) Representative: Wagner, Jutta

(57) **Abstract**

The present invention relates to a binder comprising calcium sulfoaluminate (CSA) cement and a magnesium compound, to a method of enhancing strength development and/or increasing compressive strength of building structures from CSA binders and to the use of magnesium compounds as additives for increasing compressive strength of hydrated CSA binders.

## Description

The present invention relates to a binder comprising calcium sulfoaluminate (CSA) based cement / clinker types and a magnesium compound, to a method of enhancing strength development and/or increasing compressive strength of building strucutures made from CSA based binders and to the use of magnesium compounds as additives for increasing compressive strength of hydrated CSA binders.

Calcium sulfoaluminate (CSA) cements are made from clinkers that include ye'elimite (Ca₄(AlO₂)₆SO₄ or C₄A₃$ in cement chemist's notation) as a major phase. These binders are used as constituents in expansive cements, in ultra-high early strength cements and in "low-energy" cements. Hydration of CSA cements leads to the formation of mainly ettringite and/or monophases as e.g. monosulphate. Aluminium hydroxide may be another hydration product of this binder. The amount and kinetics of formation strongly depends on the cement composition as e.g. the amount and type of sulfate bearing phases being present. Special physical properties (such as intentional expansive behaviour or rapid reaction) are obtained by the adjustment of the availability of calcium and sulfate ions. The use of CSA cement as a low-energy alternative to Portland cement has been pioneered in China, where several million tons per year are produced. The energy demand for production is lower because of the decreased kiln temperatures required for reactions, the better grindability and the lower amount of limestone in the raw mix, which needs to be endothermically decarbonated. In addition, the lower limestone content and lower fuel consumption leads to a CO₂ emission around half of that of Portland cement clinker.

Within the context of the present invention, clinker shall mean a sinter product which is obtained by burning a raw material mixture at an elevated temperature and which contains at least one hydraulically reactive phase. Cement denotes a clinker that is ground with or without adding further components. Binder or binder mixture denotes a mixture hardening hydraulically and comprising cement and typically, but not necessarily, additional finely ground components, and which is used after adding water, optionally admixtures and/or additives and aggregate. A clinker may already contain all the necessary or desired phases and be used directly as a binder after being ground to cement.

Another approach to save energy and valuable raw materials is the application of secondary raw materials or industrial by-products as raw meal components to replace primary mineral based raw materials during clinker production.

In a further approach supplementary cementitious materials, which are often industrial by-products or waste materials, are used to replace parts of the clinker during cement production and therefore save energy and primary raw material sources. These supplementary cementitious materials most often posess a puzzolanic or latent hydraulic reactivity and contribute to the mechanical performance of these composite binders.

Supplementary cementitious materials can be divided into latent hydraulic materials and pozzolans. Latent hydraulic materials are not hydraulic on their own or react only very slowly. They need an activation to undergo hydraulic reaction within useful time periods. Activation is typically achieved by (addition of) earth alkali metal compounds (e.g. Ca(OH)₂, NaOH, KOH, etc.) or sulfate (CaSO₄, Na₂SO₄, K₂SO₄, etc.) providing materials, which are able to support the formation of calcium (aluminium) silicate hydrates and/or ettringite and/or others like e.g. AFₘ-phases (strätlingite, monosulfate, monocarbonate hemicarbonate etc.) or zeolite-like mineral, etc.. Pozzolans are siliceous or alumino-siliceous materials that react with calcium from other components of a binder to form calcium silicate hydrates. The foregoing distinction is not always applied strictly, i.e. many fly ashes contain considerable amounts of calcium and are latent hydraulic materials, therefore, but usually they are designated pozzolans, nonetheless. For the present invention the distinction is not important and both are summarized as supplementary cementitious materials, partly abbreviated SCM herein.

Typical supplementary cementitious materials are natural or artificial pozzolans and latent hydraulic materials, e.g. but not exclusively ground granulated blast furnace slag, and natural or artificial pozzolans, e.g. but not exclusively type-C and/ or type-F fly ashes, calcined clays or shales, trass, brick-dust, artificial glasses, silica fume, and burned organic matter residues rich in silica such as rice husk ash or mixtures thereof.

Although there were some suggestions of adding SCM to CSA cements, this is mainly practiced for portland cement. The usefulness of SCM addition is based on the activation of SCM by alkaline calcium hydroxide released during hardening of portland cement or to the reaction of SCM with calcium hydroxide, respectively. Since calcium sulfoaluminate cement is less alkaline and does not release significant amounts of calcium hydroxide, an addition of SCM is not expected to be as useful as for portland cement.

A general problem of composite cements is the increasing demand of high early strength. Time granted for construction is continuously decreasing. In the manufacturing of building elements a fast form removal is desired to optimize investment return. Therefore, binders providing high early strength are required, of course without decreasing ultimate strength, durability or workability. There further remains the object to provide cements that have a minimal environmental impact with regard to energy and natural raw materials.

An increase in early strength or an enhanced strength development can be achieved with additives. For example, shotcrete usually contains admixtures that accelerate setting and/or hardening, like aluminium compounds, calcium compounds or alkanolamines. These admixtures have to be carefully metered, since some of them can act as retarders when used in an overdose.

An example for the use of an accelerator in a special calcium sulfoaluminate belite cement is EP 2 105 419 A1. A combination of calcium salts with alkanolamines is proposed to enhance the 7 days strength, and especially the 28 days strength of cements from a clinker comprising 5 to 25 % calcium alumino-ferrite phase, 15 to 35 % calcium sulfoaluminate phase, 40 to 75 % belite and 0.01 to 10 % minor phases. In the parallel US 2011/0041736 A1 the calcium salt is optional. The proposal requires the use of a pure cement. Neither the use of SCM's nor the addition of Mg-compounds is stated.

There is still a need to provide CSA binders, especially CSA based composite binders, with increased early and/or late compressive strength.

Surprisingly, it has now been found that magnesium ions, in particular the addition of low (temperature ranging from 300 to < 750 °C) or middle burnt (temperature ranging from 750 to < 1100 °C) MgO, an amorphous magnesium compound (e.g. based on Mg(OH)₂, MgO, MgCO_{3·}zH₂O, magnesium silicate hydrates), magnesium hydroxides like e.g. Mg(OH)₂ and/or magnesium salts like e.g. MgCO₃·zH₂O with z ranging from 1 to 3, K₂Mg₂(SO₄)₃, MgSO₄, MgCl₂ and Mg(NO₃)₂, are able to increase and even accelerate the compressive strength development of CSA based composite cements. By replacing e.g. up to 10% of a composite cement by MgO the following benefits are achieved (i) replacement of even more clinker/cement by reactive MgO (only calcined at 700°C), (ii) potential higher initial strength and (iii) higher final strength plus (iv) potentially enhanced durability (denser microstructure, more stable phases formed (e.g. hydro-talcite-like compounds) carbonate buffer (Mg(OH)₂ -> MgCO₃), etc.).

Another important parameter of cement and concrete is the resistance to various physical and chemical attacks. Especially the carbonation or better the resistance to carbonation plays an essential role for the durability of e.g. concrete as it is is associated with the corrosion of steel reinforcements and as well to shrinkage phenomena.

Carbonation in portland cement (OPC) based products is in principle the result of the dissolution of CO₂ in the concrete pore fluid and the resulting interaction with mainly calcium hydroxide (Ca(OH)₂) and calcium silicate hydrate (C-S-H) to form calcite (CaCO₃). Calcium hydroxide and calcium silicate hydrate (C-S-H) represent the products of the OPC hydration, whereby calcium hydroxide represents the main carbonate buffer to "protect" other present cement hydrates and overall to avoid / reduce the corrosion of steel reinforcements.

In CSA based binders, calcium hydroxide is typically absent or only present in minor quantities, at later ages of hydration due to the reaction of C₂S, and as a result thereof a sophisticated carbonate buffer is missing. To enable a better protection of e.g. steel reinforcements, the addition of magnesium compounds could lead to significant enhanced properties to that respect. For example, the addition of MgO to CSA based products would lead, during the hydration, to the formation of Mg(OH)₂ and magnesium based layered double hydroxides, like e.g. hydrotalcite or quintinite. Both phases are can react with CO₂ and bind it permanently within their crystal structure.

Therefore, the above object is solved by a binder comprising calcium sulfoaluminate cement and a magnesium compound, by a method of enhancing strength development and/or increasing compressive strength of building structures from CSA binders comprising an addition of compounds that provide magnesium ions during hydration and to the use of magnesium compounds as additives for increasing compressive strength of hydrated CSA binders.

One major advantage is the enhancement of the carbonate uptake or the carbonate buffer potential of such binders.

The addition of magnesium compounds allows to increase the compressive strength of hydrated CSA cements and binders. It is especially beneficial for binders comprising CSA cement and supplemental cementitious materials. Thus, a considerable saving of energy and natural raw material resources is achieved, as well as a reduction of CO₂ emission, without having to sacrifice compressive strength.

To simplify the description, the following abbreviations, which are common in the cement industry, are used: H - H₂O, C - CaO, A - Al₂O₃, F - Fe₂O₃, M - MgO, S - SiO₂ und $ - SO₃. Additionally, compounds are generally indicated in the pure forms thereof, without explicitly stating series of solid solutions/substitution by foreign ions and the like, as are customary in technical and industrial materials. As any person skilled in the art will understand, the composition of the phases mentioned by name in the present invention may vary, depending on the chemism of the raw meal and the type of production, due to the substitution with various foreign ions, such compounds likewise being covered by the scope of the present invention.

Calcium sulfoaluminate cements or clinkers contain mainly polymorphs of ye'elimite. Depending on the raw materials used and the burning temperature they typically also contain belite, ferrites and/or aluminates, anhydrite and may further contain ternesite, see e.g. WO 2013/023728 A2. Manufacturing of the calcium sulfoaluminate cements takes place in a manner known per se. Typically raw materials are mixed in appropriate amounts, ground and burnt in a kiln to give a clinker. The clinker is then ground, usually together with calcium sulfate and optionally some or all of the other components, to give the cement. A separate grinding is also possible and may be advantageous when the grindability of the components is largely different. The sulfate can be gypsum, bassanite, anhydrite or mixtures thereof whereby anhydrite is preferably used.

Calcium sulfoaluminate clinkers and cements containing C₄A₃$ as a main phase are known and available in different qualitites / compositions. For the present invention all are suitable. For example, the following products are (commercially) available / knwon:

### Lafarge BCSAF:

| | | | |
|---|---|---|---|
| Belite (α; +/-β) C₂S | 40 - 75%; | Ye'elimite C₄A₃$ | 15 - 35%; |
| Ferrite C₂(A,F) | 5 - 25%; | Minor phases | 0.1 - 10% |

### Lafarge Rockfast®:

| | | | |
|---|---|---|---|
| Belite (α; +/-β) C₂S | 0 - 10%; | Ye'elimite C₄A₃$ | 50 - 65% |
| Aluminate CA | 10 - 25%; | Gehlenite C₂AS | 10 - 25%; |
| Ferrite C₂(A,F) | 0 - 10%; | Minor phases | 0 - 10% |

### Italcementi Alipre®:

| | | | |
|---|---|---|---|
| Belite (α; +/-β) C₂S | 10 - 25%; | Ye'elimite C₄A₃$ | 50 - 65%; |
| Anhydrite C$ | 0 - 25%; | Minor phases | 1 - 20% |

### Cemex CSA:

| | | | |
|---|---|---|---|
| Belite (α; +/-β) C₂S | 10 - 30%; | Ye'elimite C₄A₃$ | 20 - 40% |
| Anhydrite C$ | >1%; | Alite C₃S | >1 - 30%; |
| Free lime CaO | <0.5 - 6%; | Portlandite Ca(OH)₂ | 0 - 7%; |
| Minor phases | 0 - 10% | | |

### Denka® CSA

| | | | |
|---|---|---|---|
| Belite (α; +/-β) C₂S | 0 - 10%; | Ye'elimite C₄A₃$ | 15 - 25%; |
| Anhydrite C₂(A,F) | 30 - 40%; | Portlandite Ca(OH)₂ | 20 - 35%; |
| Free lime CaO | 1 - 10%; | Minor phases | 0 - 10% |

### China Type II & III CSA

| | | | |
|---|---|---|---|
| Belite (α; +/-β) C₂S | 10 - 25%; | Ye'elimite C₄A₃$ | 60 - 70%; |
| Ferrite C₂(A,F) | 1 - 15%; | Minor phases | 1 - 15% |

### Barnstone CSA

| | | | |
|---|---|---|---|
| Belite (α; +/-β) C₂S | 22%; | Ye'elimite C₄A₃$ | 60%; |
| Aluminate C₁₂A₇ | 5%; | Alite C₃S | 8%; |
| Ferrite C₂(A,F) | 4%; | Minor phases | 1% |

### HeidelbergCement BCT

| | | | |
|---|---|---|---|
| Belite (α; +/-β) C₂S | 1 - 80%; | Ye'elimite ΣC₄A₃$ | 5 -70%; |
| Ternesite C₅S₂$ | 5 - 75%; | Minor phases | 0 - 30%. |

The calcium sulfoaluminate cement typically comprises 10 - 100 % by weight, preferably 20 - 80 % by weight and most preferred 25 to 50 % by weight C₄A₃₋ₓFₓ$, with x ranging from 0 to 2, preferably from 0.05 to 1 % by weight and most preferably from 0.1 to 0.6, 0 - 70 % by weight, preferably 10 to 60 % by weight and most preferred 20 to 50 % by weight C₂S, 0 - 30 % by weight, preferably 1 to 15 % by weight and most preferred 3 to 10 % by weight aluminates, 0 - 30 % by weight, preferably 3 to 25 % by weight and most preferred 5 to 15 % by weight ferrites, 0 - 30 % by weight preferably 3 to 25 % by weight and most preferred 5 to 15 % by weight ternesite, 0 - 30 % by weight preferably 5 to 25 % by weight and most preferred 8 to 20 % by weight calcium sulfate and up to 20 % by weight minor phases. Aluminates are preferably, but not exclusively, C₃A, CA, C₁₂A₇, CA₂, amorphous aluminate phases and mixtures thereof. Ferrites are preferably, but not exclusively, C₂A_{y}F_{1-y}, with y ranging from 0.2 to 0.8, preferably from 0.4 to 0.6, especially in the of C₄AF, C₂F, CF, CF₂, amorphous ferritic phases or mixtures thereof.

The invention is beneficial to all kinds of calcium sulfoaluminate cements both belite rich and poor ones as well as with differing amounts of aluminates and ferrites. The invention is especially beneficial for composite binders comprising CSA cement and one or more SCM.

Preferred are composite binders, wherein the content of the supplementary cementitious materials ranges from 10 to 90 % by weight, preferably from 20 to 80 % by weight. The quantity of latent hydraulic materials ranges from 0 to 100 % by weight, preferably from 20 to 80 % by weight and most preferably from 30 - 70 % by weight of the total content of the supplementary cementitious materials. The content of pozzolanic materials ranges from 0 to 40 % by weight, preferably from 5 to 35 % by weight and most preferably from 10 - 30 % by weight by weight of the total content of the supplementary cementitious materials.

For reasons of reactivity it is preferred to add less SCM when the amount of pozzolanic materials in the SCM is higher. For example, when the SCM contains only pozzolanic materials it is preferred to use from 10 to 40 % by weight, especially from 20 to 30 % by weight, SCM in the composite binder. With only latent hydraulic materials as SCM the content of SCM in the binder can be from 10 to up to 90 % by weight, preferably 30 to 60 % by weight are used. Specifically, it is preferred that the content of the supplementary cementitious materials ranges from 30 to 60 % by weight of the binder for supplementary cementitious materials comprising at least 70 % by weight latent hydraulic materials. for supplementary cementitious materials comprising at least 70 % by weight pozzolanic materials the content of the supplementary cementitious materials ranges from 10 to 30 % by weight of the binder.

The supplemental cementitious materials can be chosen from all available materials showing latent hydraulic or pozzolanic properties. Preferred are ground granulated blast furnace slag, fly ashes type C and F and natural pozzolans, calcined clays, artificial glasses, other slags rather than ground granulated blast furnace slag. Especially preferred are calcium-rich artificial galsses, type C fly ashes and ground granulated blast furnace slags

It is further preferred, when the composite binder has a fineness, according to the particle size distribution (PSD) determined by laser granulometry, with a d₉₀ ≤ 90 µm, preferably a d₉₀ ≤ 60 µm and most preferred a d₉₀ ≤ 40 µm. The Rosin Rammler Parameter (slope) n can vary from 0.7 to 1.5, preferably from 0.8 to 1.3 and most preferably from 0.9 to 1.15. The fineness of the other materials like e.g. the SCMs or additives can be adjusted to finenesses typically used in cement plants and/or omptimized with respect the PSD of the total binder to reduce the slope n to values below 1.1, preferably below 1.0 and most preferred below 0.9. As a result therof the overall water demand, to achieve a good workability, could be decreased.

The cement according to the invention is obtained by grinding the clinker, with or without addition of further substances. Usually, calcium sulfate is added before or during grinding when its content in the clinker is not as desired. It can also be added after grinding.

In one preferred embodiment the weight ratio R_{$/(Y+A+F)} of calcium sulfate to ye'elimite, aluminates and ferrites in the CSA cement or the composite binder is maintained in the range from 0.1 to 0.9. Preferably, the ratio is set from 0.20 to below 0.9, especially preferred from 0.3 to 0.85. R_{$/(Y+A+F)} especially stands for CaSO₄ / (Σ ye'elimite + Σ aluminates + Σ ferrites), wherein
- calcium sulfate means the quantity of anhydrous calcium sulfate originating from CaSO₄, CaSO₄·0.5 H₂O, and CaSO₄·2 H₂O present in the binder,
- ye'elimite means the content of C₄A₃₋ₓFₓ$, with x ranging from 0 to 2, C₄A₃$ with other substitutions with one or more foreign ions, or mixtures thereof;
- Z aluminates represents the sum of all phases based on clacium aluminates, preferbaly it means the content of CA, C₁₂A₇, CA₂, C₃A, amorphous aluminate phases or mixtures thereof, and
- Σ ferrites represents the sum of all phases based on calcium oxide and iron oxide, preferably it means the content of C₂A_{y}F_{1-y}, with y ranging from 0.2 to 0.8, C₂F, CF, CF₂, amorphous ferritic phases or mixtures thereof.
Phases such as C₄A₃₋ₓFₓ$, C₂A_{y}F_{1-y}, CA, C₁₂A₇, CA₂, C₃A, C₂F, CF, CF₂ etc. can be crystalline, partly crystalline or amorphous. The phases mentioned could and typically do conatain substitutions with foreign ions (or other/additional foreign ions than those stated explcicitly), as is common with technical materials. In the case of phases containingn C, A and F it does not matter whether they are considered as aluminates or as ferrites, as long as they are included and not calculated twice.

The magnesium ions can be provided by any magnesium compound showing adequate solubility in the binder upon mixing the binder with water. Especially suitable are:
- low (300 to < 750 °C) to middle (750 to 1100 °C) burnt MgO,
- magnesium hydroxide
- magnesium salts of inorganic acids, preferably sulfate (e.g. MgSO₄ or K₂Mg₂(SO₄)₃), chlorite, nitrate, hydrogencarbonate or MgCO₃·wH₂O with w ranging from 1 to 3, xMgCO₃·yMg(OH)₂·zH₂O with x ranging from 1 to 4, typically around 4, y ranging from 0.5 to 2, typically around 1, and z ranging from 0 to 5, typically around 4 to 5, wherby for x, y and z also not integer values are possible.
- magnesium salts of organic acids, preferably formiate or acetate
- an amorphous magnesium compound (e.g. based on Mg(OH)₂, MgO, MgCO_{3·}zH₂O, xMgCO₃·yMg(OH)₂·zH₂O, magnesium silicate hydrates or mixtures thereof)
- SCM rich in MgO, i.e. with a content of MgO > 10 % by weight
- mixtures of two or more of the foregoing.

It is preferred to use from 0.0.5 to 20 % by weight calculated as MgO in relation to the total mass of the binder, preferably from 1 to 15 % by weight, especially preferred from 3 to 10 % by weight, of the magnesium compound.

The binder according to the invention can comprise further components chosen from e.g. but not exclusively portland cement or portland cement clinker, lime stone, dolomite, ternesite, and alkali and/or calciumsalts. The content of a contained portland cement, portland cement clinker, limestone, ternesite, and/or dolomite ranges from 1 to 20 %, preferably from 3 to 20 % by weight and most preferred from 5 to 15 % by weight. The content of a contained alkali salt and/or calcium salt ranges from 0.01 % to 5 % by weight, preferably from 0.1 to 3 % by weight and most preferred from 0.5 to 2 % by weight.

Furthermore, common admixtures and/or additives can be present in the binder and/or its mixture with water. Admixtures are typically added in an amount of 0.01 up to 5 % by weight, preferably from 0.1 to 3 % by weight and most preferred from 0.5 to 2 % by weight in relation to the binder.

Naturally, the amounts of all components of one specific mixture add up to 100 %, i.e. amounts of individual components of a mixture are chosen so that the mixture contains a sum of 100 %.

Admixtures are usually added to concrete, mortar etc. made of a binder, but dry ones can also be added to the binder. Typical admixtures are:
- Accelerators, which speed up the hydration (hardening), like CaO, Ca(OH)₂, CaCl₂, Ca(NO₃)₂ Al₂(SO₄)₃, KOH, K₂SO₄, K₂CO₃, NaOH, Na₂SO₄, Na₂CO₃, NaNO₃, LiOH, LiCl, Li₂CO₃.
- Retarders that slow the hydration. Typical polyol retarders are sugar, sucrose, sodium gluconate, glucose, citric acid, and tartaric acid.
- Air entrainments which add and entrain air bubbles, which reduces damage during freeze-thaw cycles, increasing durability.
- Plasticizers that increase the workability of plastic or "fresh" concrete, allowing it be placed more easily, with less consolidating effort. A typical plasticizer is lignosulfonate. Plasticizers can be used to reduce the water content of a concrete while maintaining workability and are sometimes called water-reducers due to this use. Such treatment improves its strength and durability characteristics.
- Superplasticizers (also called high-range water-reducers) that are a class of plasticizers that have fewer deleterious effects and can be used to increase workability more than is practical with traditional plasticizers. Compounds used as superplasticizers include sulfonated naphthalene formaldehyde condensate, sulfonated melamine formaldehyde condensate, acetone formaldehyde condensate and polycarboxylate ethers.
- Pigments can be used to change the color of concrete, for aesthetics.
- Corrosion inhibitors are used to minimize the corrosion of steel and steel bars in concrete.
- Bonding agents are used to create a bond between old and new concrete (typically a type of polymer).
- Pumping aids improve pumpability, thicken the paste and reduce separation and bleeding.
Preferably, (super)plasticizers and/or retarders are comprised. Typically, (super)plasticizers and/or retarders are added in the commonly known amounts, e.g. 0.05 to 1 % by weight, prefreably 0.05 to 0.5 % by weight, relative to the CSA cement plus, if applicable, to the sum of any SCM and/or additional hydraulic components added.

Typical additives are for example but not exclusively fillers, fibres, fabrics / textiles, silica fume and crushed or ground glass. Fillers are e.g. quartz, limestone, dolomite, inert and/or crystalline fly ashes. Fibres are e.g. steel fibres, glass fibres or plastic fibres.

The binder according to the invention can be used to make concrete, mortar, plaster and other hydraulically setting building materials. It is also useful for manufacturing special construction chemical compositions like tile adhesives, floor screeds, etc. The use can take place in the same manner as that of known binders or cements.

The method of enhancing the strength development according to the invention comprises adding a magnesium compound to a CSA based binder. The magnesium compound is preferably added to the CSA cement, i.e. the ground CSA clinker, together with any SCM. In fact, the magnesium compound can also be provided (at least partly) by a SCM added. It is of course also possible to add the magnesium compound to a binder directly before adding water and any further ingredient desired, like aggregate.

A further aspect of the present invnetion is the use of magnesium compounds as addtive for accelerating the strength development or increasing the compressive strength of hydrated CSA binders. To this end, any of the above described magensium compounds can be added to a hydraulically setting building material or a special construction chemical composition at any time before adding water or together with the water.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred featurest that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

From a CSA cement and slag with the composition shown in tables 1 a and 1 b composite binders were mixed. The basic cement is composed of approximately 79.9 % by weight ground clinker and 20 % by weight anhydrite. The binder A is composed of 74.5 % by weight cement and 25.5 % slag, binder B of 20.5 % by weight slag and 5 % by weight soft burned (1 h at 700 °C) MgO, binder C of 20.5 % by weight slag and 5 % by weight Mg(OH)₂ and binder of D 25.5 % by weight quartz (inert filler). Binders A and D are comparison examples.

**Table 1a**

| Phase | average content in CSA |
|---|---|
| Σ C₄A₃₋ₓFₓ$ | 35 % |
| Σ C₂S | 45 % |
| Σ Ferrites | < 1 % |
| Σ Aluminates | 11 % |
| others | 10 % |

**Table 1b**

| | Clinker | Anhydrite | Slag |
|---|---|---|---|
| | g/100g | | |
| GV 1050 °C | 0.13 | 3.65 | 0.40 |
| SiO₂ | 16.57 | 2.04 | 40.14 |
| Al₂O₃ | 23.88 | 0.6 | 7.77 |
| TiO₂ | 0.99 | 0.02 | 0.30 |
| MnO | 0.04 | 0 | 0.64 |
| Fe₂O₃ | 2.30 | 0.22 | 0.78 |
| CaO | 46.93 | 38.3 | 37.90 |
| MgO | 1.30 | 1.45 | 9.51 |
| K₂O | 0.43 | 0.15 | 0.55 |
| Na₂O | 0.16 | 0 | 0.36 |
| SO₃ | 6.60 | 52.3 | 1.47 |
| P₂O₅ | 0.20 | 0.02 | 0.02 |

The strength development was measured as described in EN 196-1 on mortar by making cubes of 2 cm edge length from a mixture of 2 parts (by weight) cement, 3 parts sand (ISS1, Ø size of 1 mm) and 1 part water. The water/binder ratio was 0.5. The loading velocity was adjusted to 0.4 kN/s. The results are shown in table 2.

**Table 2**

| No. | cement (incl. sulfate) | slag | MgO | Mg(OH)₂ | quartz | strength [MPA] after | | | | |
|---|---|---|---|---|---|---|---|---|---|---|
| | | | | | | 1d | 2d | 7d | 28d | 90d |
| A | 74.5% | 25.5% | | | | 20.9 | 23.2 | 34.9 | 37.3 | 39.8 |
| B | 74.5% | 20.5% | 5% | | | 20.7 | 21.5 | 35.6 | 46.2 | 47.3 |
| C | 74.5% | 20.5% | | 5% | | 21.4 | 22.7 | 33.7 | 40.2 | 41.3 |
| D | 74.5% | | | | 25.5% | 19.1 | 21.5 | 32.8 | 38.6 | 37.7 |

It can be seen that that MgO significantly and Mg(OH)₂ slightly improves the compressive strength development already at 28 days of hydration. The sample B reaches around 7 MPa more compared to the sample A. Additionally, sample A and D are very close to each other which proves that the slag did not contribute to the strength development and potentially to the hydration development over the investigated time scale.

### Example 2

From a CSA cement and slag with the chemical composition shown in tables 3a and 3b composite binders were mixed. The basic cement is composed of approximately 84 % by weight ground clinker and 16 % by weight anhydrite. The binder A is composed of 75 % by weight cement and 25 % slag, binder B of 25 % by weight quartz, binder C of 20 % by weight slag and 5 % by weight soft burned MgO (1 h at 700 °C) and binder of D 20 % by weight quartz (inert filler) and 5 % by weight soft burned MgO (1 h at 700 °C).

**Table 3a**

| Phase | average content in CSA |
|---|---|
| Σ C₄A₃₋ₓFₓ$ | 22 % |
| Σ C₂S | 60 % |
| Σ Ferrites | 11 % |
| Σ Aluminates | n.d. |
| Others | 7 % |

| | |
|---|---|
| n.d. - not detected | |

**Table 3b**

| | Clinker | Anhydrite | Slag |
|---|---|---|---|
| | g/100g | | |
| GV 1050 °C | 0.21 | 3.65 | 0.40 |
| SiO₂ | 17.48 | 2.04 | 40.14 |
| Al₂O₃ | 13.44 | 0.6 | 7.77 |
| TiO₂ | 0.82 | 0.02 | 0.30 |
| MnO | 0.13 | 0 | 0.64 |
| Fe₂O₃ | 4.64 | 0.22 | 0.78 |
| CaO | 51.82 | 38.3 | 37.90 |
| MgO | 2.80 | 1.45 | 9.51 |
| K₂O | 0.38 | 0.15 | 0.55 |
| Na₂O | 0.01 | 0 | 0.36 |
| SO₃ | 7.29 | 52.3 | 1.47 |
| P₂O₅ | 0.07 | 0.02 | 0.02 |

The strength development was measured like in example 1 and the results are shown in table 4.

**Table 4**

| No. | cement (incl. sulfate) | slag | MgO | quartz | strength [MPA] after | | | | |
|---|---|---|---|---|---|---|---|---|---|
| | | | | | 1d | 2d | 7d | 28d | 90d |
| A | 75 % | 25 % | | | 7.7 | 15.2 | 20.2 | 26.0 | 28.4 |
| B | 75 % | | | 25 % | 8.1 | 16.5 | 21.5 | 26.5 | 25.8 |
| C | 75 % | 20 % | 5 % | | 9.7 | 11.2 | 21.5 | 29.4 | 32.3 |
| D | 75 % | | 5 % | 20 % | 9.5 | 12.6 | 23.5 | 29.8 | 26.9 |

It can be seen that MgO improves the compressive strength development measurably at 28 days of hydration.

## Claims

1. Binder comprising calcium sulfoaluminate cement and a magnesium compound.

2. Binder according to claim 1, wherein the calcium sulfoaluminate cement comprises 10 - 100 % by weight C₄A₃₋ₓFₓ$, with x ranging from 0 to 2, preferably from 0.05 to 1 and most preferably from 0.1 to 0.6, 0 - 70 % by weight C₂S , 0 - 30 % by weight aluminates, 0 - 30 % by weight ferrites, 0 - 20 % by weight calcium sulfate and up to 20 % minor phases.

3. Binder according to claim 1 or 2, wherein at least one hydraulically reactive calcium aluminate is present, chosen from C₃A, CA, C₁₂A₇, CA₂, an amorphous aluminate phase or mixtures thereof.

4. Binder according to claim 1, 2 or 3, wherein at least one reactive calcium (aluminium) ferrite is present, chosen from C₂A_{y}F_{1-y}, with y ranging from 0.2 to 0.8, preferably from 0.4 to 0.6, especially in the form of C₄AF, C₂F, CF, CF₂, an amorphous ferritic phase or mixtures thereof.

5. Binder according to at least one of claims 1 to 4, further comprising supplementary cementitious materials.

6. Binder according to claim 5, wherein the supplementary cementitious materials are chosen from natural or artificial pozzolans and latent hydraulic materials, preferably from ground granulated blast furnace slag, type-C and/ or type-F fly ashes, calcined clays, calcined shales, trass, brick-dust, artificial glasses, silica fume, and burned organic matter residues rich in silica, especially rice husk ash, or mixtures thereof.

7. Binder according to claim 5 or 6, wherein the content of supplemental cementitious material ranges from 10 to 90 % by weight in relation to the total mass of the binder, preferably from 30 to 70 % by weight.

8. Binder according at least one of claims 1 to 7, wherein the calcium sulfoaluminate cement has a fineness, according to the particle size distribution determined by laser granulometry, with a d₉₀ ≤ 90 µm, preferably a d₉₀ ≤ 60 µm and most preferred a d₉₀ ≤ 40 µm, wherein the Rosin Rammler Parameter (slope) n can vary from 0.7 to 1.5, preferably from 0.8 to 1.3, and most preferably from 0.9 to 1.15.

9. Binder accoding to at least one of claims 1 to 8, further comprising at least one of portland cement, portland cement clinker, limestone, dolomite, lime, portlandite, ternesite or mixtures thereof.

10. Binder according to at least one of claims 1 to 9, wherein the magnesium compound is chosen from
- low (300 to < 750 °C) to middle (750 to 1100 °C) burnt MgO,
- magnesium hydroxide
- magnesium salts of inorganic acids, preferably sulfate (e.g. MgSO₄ or K₂Mg₂(SO₄)₃), chlorite, nitrate, hydrogencarbonate or MgCO₃·zH₂O with z ranging from 1 to 3
- magnesium salts of organic acids, preferably formiate or acetate
- An amorphous magnesium compound (e.g. based on Mg(OH)₂, MgO, MgCO_{3·}zH₂O, magnesium silicate hydrates or mixtures thereof)
- SCM rich in MgO, i.e. with a content of MgO > 10 % by weight
- mixtures of two or more of the foregoing.

11. Binder according to at least one of claims 1 to 10, wherein the content of magnesium compound calculated as MgO ranges from 0.5 to 20 % by weight in relation to the total mass of the binder, preferably from 1 to 15 % by weight, especially preferred from 3 to 10 % by weight of the total binder mass.

12. Binder according to at least one of claims 1 to 11, wherein the mass ratio of calcium sulfate to the sum of ye'elimite, aluminates and ferrites in the binder ranges from 0.1 to 0.9, preferably from 0.20 to below 0.9 and especially preferred from 0.3 to 0.85.

13. Binder according to at least one of claims 1 to 12, further comprising additives, preferably chosen from fillers, fibres, fabrics / textiles, silica fume, crushed or ground glass and mixtures thereof.

14. Binder according to at least one of claims 1 to 13, further comprising admixtures, preferably chosen from accelerators, retarders, plasticizers, super plasticizers, air entrainments, pigments, corrosion inhibiotrs, bonding agents, pumping aids and mixtures thereof, especially preferred plasticizers and/or super plasticizers.

15. Method of accelerating strength development and/or increasing the compressive strength of building structures made from CSA binders, wherein a magnesium compound is added to the binder.

16. Method according to claim 15, wherein the magnesium compound is chosen from
- low (300 to < 750 °C) to middle (750 to 1100 °C) burnt MgO,
- magnesium hydroxide
- magnesium salts of inorganic acids, preferably sulfate (e.g. MgSO₄ or K₂Mg₂(SO₄)₃), chlorite, nitrate, hydrogencarbonate or MgCO₃·wH₂O with w ranging from 1 to 3, xMgCO₃·yMg(OH)₂·zH₂O with x ranging from 1 to 4, y ranging from 0.5 to 2 and z ranging from 0 to 5
- magnesium salts of organic acids, preferably formiate or acetate
- An amorphous magnesium compound (e.g. based on Mg(OH)₂, MgO, MgCO_{3·}zH₂O, magnesium silicate hydrates or mixtures thereof)
- SCM rich in MgO, i.e. with a content of MgO > 10 % by weight
- mixtures of two or more of the foregoing.

17. Use of magnesium compounds as additives for increasing compressive strength of hydrated CSA binders.

18. Use according to claim 17, wherein the magnesium compound is chosen from
- low (300 to < 750 °C) to middle (750 to 1100 °C) burnt MgO,
- magnesium hydroxide
- magnesium salts of inorganic acids, preferably sulfate (e.g. MgSO₄ or K₂Mg₂(SO₄)₃), chlorite, nitrate, hydrogencarbonate or MgCO₃·wH₂O with w ranging from 1 to 3, xMgCO₃·yMg(OH)₂·zH₂O with x ranging from 1 to 4, y ranging from 0.5 to 2 and z ranging from 0 to 5
- magnesium salts of organic acids, preferably formiate or acetate
- An amorphous magnesium compound (e.g. based on Mg(OH)₂, MgO, MgCO_{3·}zH₂O, magnesium silicate hydrates or mixtures thereof)
- SCM rich in MgO, i.e. with a content of MgO < 15 % by weight
- mixtures of two or more of the foregoing.

19. Use according to claim 17 or 18, wherein the magnesium compound is added in an amount of 0.5 to 20 % by weight, preferably 1 to 15 % by weight, especially preferred 3 to 10 % by weight, calculated as MgO and in relation to the total mass of the binder.
